(19) Europäisches Patentamt
European Patent Office
Office européen des brevets

(11) **EP 4 738 915 A1**

(12) **EUROPEAN PATENT APPLICATION**
published in accordance with Art. 153(4) EPC

(43) Date of publication:
**06.05.2026 Bulletin 2026/19**

(21) Application number: **24830140.0**

(22) Date of filing: **30.04.2024**

(51) International Patent Classification (IPC):
***H04W 24/08*** (2009.01)

(52) Cooperative Patent Classification (CPC):
**H04W 64/00; H04W 4/029; H04W 16/18;
H04W 24/08**

(86) International application number:
**PCT/CN2024/090948**

(87) International publication number:
**WO 2025/001492 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.06.2023  CN 202310797641**

(71) Applicant: **Ruijie Networks Co., Ltd.
Fuzhou, Fujian 350002 (CN)**

(72) Inventor: **GAO, Julin
Fuzhou, Fujian 350002 (CN)**

(74) Representative: **Mathys & Squire
Theatinerstraße 8
80333 München (DE)**

(54) **ROAMING TEST METHOD AND APPARATUS, TERMINAL DEVICE, AND STORAGE MEDIUM**

(57)     Embodiments of this application provide a roaming test method and apparatus, terminal equipment, and a storage medium, where the method is applied to terminal equipment and includes: performing augmented reality AR positioning on the terminal equipment to obtain AR coordinates of a track point of the terminal equipment, and determining detection data corresponding to the track point, where the AR coordinates are coordinates in an AR coordinate system of the terminal equipment, and the track point represents a position of the terminal equipment in a roaming test in a detection region; updating a movement track of the terminal equipment based on the AR coordinates of the track point; and displaying the corresponding detection data.

```
┌─────────────────────────────────────────────┐
│ Perform AR positioning at a track point of    │
│ terminal equipment to obtain AR coordinates   │──── S101
│ of the track point, and determine detection   │
│ data corresponding to the track point         │
└─────────────────────────────────────────────┘
                      │
                      ▼
┌─────────────────────────────────────────────┐
│ Generate a movement track of the terminal     │
│ equipment based on the AR coordinates of      │──── S102
│ the track point                                │
└─────────────────────────────────────────────┘
                      │
                      ▼
┌─────────────────────────────────────────────┐
│ Display the movement track and the            │──── S103
│ detection data                                 │
└─────────────────────────────────────────────┘
```

FIG. 1

EP 4 738 915 A1

**Description**

**CROSS-REFERENCE TO RELATED APPLICATIONS**

This application claims priority to Chinese Patent Application No. 202310797641.3, filed with the China National Intellectual Property Administration on June 30, 2023 and entitled "ROAMING TEST METHOD AND APPARATUS, TERMINAL EQUIPMENT, AND STORAGE MEDIUM", which is incorporated herein by reference in its entirety.

**TECHNICAL FIELD**

Embodiments of this application relate to the field of communication technologies, and in particular, to a roaming test method and apparatus, terminal equipment, and a storage medium.

**BACKGROUND**

A wireless access point (AP) is an access point for a wireless network, that is, an access point for a user of a wireless device to access a wired network. In implementation, a plurality of APs need to be deployed in some regions, and roaming tests are required to evaluate deployment statuses of the APs after the deployment.
In the related art, a tester moves within the deployment region while carrying a mobile phone to interact with the APs to conduct roaming tests and obtain roaming test results. Then, based on the roaming test results, the tester evaluates whether the deployment of the APs is appropriate.

**SUMMARY**

Embodiments of this application provide a roaming test method and apparatus, terminal equipment, and a storage medium, to obtain a movement track in a roaming test.
According to a first aspect, an embodiment of this application provides a roaming test method, applied to terminal equipment, where the method includes:

performing augmented reality (AR) positioning at a track point of the terminal equipment to obtain AR coordinates of the track point; and determining detection data corresponding to the track point, where the AR coordinates are coordinates in an AR coordinate system of the terminal equipment, and the track point is a position of the terminal equipment in a roaming test in a detection region; and
generating a movement track of the terminal equipment based on the AR coordinates of the track point, and displaying the movement track and the detection data.

In the foregoing solution, in the roaming test process, not only the detection data corresponding to the track point (the position of the terminal equipment) is obtained in real time, but also the AR coordinates of the track point in the AR coordinate system are obtained in real time through AR positioning, that is, detection data of each track point and the corresponding AR coordinates (position information) are obtained in real time during the roaming test, so that the deployment of the APs may be more accurately evaluated based on the detection data of the track point and the corresponding AR coordinates after the roaming test is completed. In addition, based on the AR coordinates of the track point, the movement track (updated in real time along with the movement of the terminal equipment) of the terminal equipment is generated; the reality view corresponding to the movement track, the detection data, and the detection region is displayed, and in this way, the user may learn a test result corresponding to the tested track point based on the movement track and the detection data, and plan a subsequent test route more properly with reference to this information, to conduct the roaming test more effectively.
In some optional implementations, before the generating the movement track of the terminal equipment, the method further includes:

determining image coordinates and first AR coordinates of a first positioning point in the detection region in response to a floor plan of the detection region, where the first positioning point includes at least two positioning points, the image coordinates are coordinates in an image coordinate system of the floor plan, and the first AR coordinates are coordinates in an initial AR coordinate system of the terminal equipment; and
determining a first adjustment scale for the image coordinate system and the initial AR coordinate system based on the image coordinates and the first AR coordinates of the first positioning point.

The generating a movement track of the terminal equipment based on the AR coordinates of the track point includes:

when the AR coordinate system corresponding to the terminal equipment is not shifted, converting the first AR coordinates of the track point into image coordinates of the track point based on the first adjustment scale; and generating a movement track of the terminal equipment in the floor plan based on the image coordinates of the track point.

In the foregoing solution, the AR coordinate system is used for the positioning of the terminal equipment. The floor plan is an image, and the image coordinate system is used. At least two first positioning points are used, and the image coordinates and the first AR coordinates of the first positioning points are determined. Then the first adjustment scale of the image coordinate system and the initial AR coordinate system is determined, the first AR coordinates of the track point are converted based on the first adjustment scale, the coordinates in the image coordinate system of the floor plan may be obtained, then the movement track is generated in the floor plan, and the floor plan includes an indoor distribution structure of the detection region, which may more effectively guide the user to plan a subsequent test route.

In some optional implementations, the method further includes:

when the AR coordinate system corresponding to the terminal equipment is shifted, determining image coordinates and second AR coordinates of a second positioning point, where the second positioning point includes at least two positioning points, and the second AR coordinates are coordinates in an shifted AR coordinate system of the terminal equipment; and

determining a second adjustment scale for the image coordinate system and the shifted AR coordinate system based on the image coordinates and the second AR coordinates of the second positioning point.

The generating a movement track of the terminal equipment based on the AR coordinates of the track point further includes:

when the AR coordinate system corresponding to the terminal equipment is shifted, converting the second AR coordinates of the track point after the shifted into the image coordinates of the track point after the shifted based on the second adjustment scale; and

generating a movement track of the terminal equipment after the shifted in a floor plan based on the image coordinates of the track point after the shifted.

In the foregoing solution, after the AR coordinate system corresponding to the terminal equipment is shifted, a conversion relationship between the AR coordinate system and the image coordinate system also changes, and the previous first adjustment scale is no longer applicable. After the shifted, at least two second positioning points are used, and the image coordinates and the second AR coordinates (coordinates in the shifted AR coordinate system) of the second positioning points are determined. Then the second adjustment scale of the image coordinate system and the shifted AR coordinate system is determined, the second AR coordinates of the track point after the shifted are converted based on the second adjustment scale, the coordinates in the image coordinate system of the floor plan may be obtained, and then the movement track is generated in the floor plan, so that the movement track may also be precisely generated in the AR shifted scenario.

In some optional implementations, when the AR coordinate system corresponding to the terminal equipment is shifted, the method further includes:

converting the second AR coordinates of the track point after the shifted into the first AR coordinates in the initial AR coordinate system based on the first adjustment scale and the second adjustment scale; and

after the roaming test is completed, generating a roaming track corresponding to the roaming test based on first AR coordinates of all track points.

In the foregoing solution, when the AR coordinate system corresponding to the terminal equipment is shifted in the roaming test process, the AR coordinates of the track point are not the AR coordinates in the uniform AR coordinate system. The second AR coordinates of the track point after the shifted are converted into the first AR coordinates in the initial AR coordinate system to obtain the first AR coordinates of all track points under a uniform coordinate standard in the roaming test process, thereby generating the roaming track for the entire roaming test in the uniform coordinate system.

In some optional implementations, the method further includes:

annotating a target track point in the movement track.

In the foregoing solution, the target track point is annotated in the movement track, to record some positions needing special attention in the track.

In some optional implementations, the displaying the movement track and the detection data further includes: displaying the movement track and the detection data on a collected reality view of the detection region.

In the foregoing solution, the collected reality view of the detection region is displayed, so that the user may plan the route more properly, for example, avoidance of an obstacle and a travel to a specific region, based on the reality view of the front.

In some optional implementations, the method further includes:
when the reality view includes a target track point, rendering annotation information corresponding to the target track point in the reality view.

In the foregoing solution, the AR annotation is implemented by rendering the annotation information corresponding to the target track point in the reality view, to more intuitively display a position needing special attention.

In some optional implementations, the target track point is determined in the following method:

in response to a user annotation instruction, determining a track point corresponding to the user annotation instruction as the target track point, where an annotation type of the target track point is a user annotation; and/or
determining, as the target track point, the track point representing AP switching, where an annotation type of the target track point is roaming.

In some optional implementations, the method further includes:
when the reality view includes a target region, rendering AP information corresponding to the target region in the reality view, where the target region is a position of an AP which the terminal equipment currently accesses.

In the foregoing solution, the AP information corresponding to the position of the AP which the terminal equipment currently accesses is rendered in the reality view, and the user is notified of the position of the AP to further guide the user to properly plan a roaming route.

In some optional implementations, the method further includes:
generating a roaming report for the detection region, where the roaming report includes a part or all of a roaming track, a number of roaming times, a signal strength change curve, and a latency change curve corresponding to the roaming test.

In the foregoing solution, the roaming report is generated, and based on the report, a position with a roaming anomaly and a position with a network anomaly and fluctuation may be subsequently inferred, to provide better signal coverage.

According to a second aspect, an embodiment of this application provides a roaming test apparatus, applied to terminal equipment, where the apparatus includes:

an AR positioning module, configured to perform AR positioning at a track point of the terminal equipment to obtain AR coordinates of the track point, where the AR coordinates are coordinates in an AR coordinate system of the terminal equipment, and the track point is a position of the terminal equipment in a roaming test in a detection region;
a test module, configured to determine detection data corresponding to the track point;
a movement track generating module, configured to generate a movement track of the terminal equipment based on the AR coordinates of the track point; and
a display module, configured to display the movement track and the detection data.

In some optional implementations, before generating the movement track of the terminal equipment, the movement track generating module is further configured to:

determine image coordinates and first AR coordinates of a first positioning point in the detection region in response to a floor plan of the detection region, where the first positioning point includes at least two positioning points, the image coordinates are coordinates in an image coordinate system of the floor plan, and the first AR coordinates are coordinates in an initial AR coordinate system of the terminal equipment; and
determine a first adjustment scale for the image coordinate system and the initial AR coordinate system based on the image coordinates and the first AR coordinates of the first positioning point.

The movement track generating module is specifically configured to:

when the AR coordinate system corresponding to the terminal equipment is not shifted, convert the first AR coordinates of the track point into the image coordinates of the track point based on the first adjustment scale; and
generate a movement track of the terminal equipment in the floor plan based on the image coordinates of the track point.

In some optional implementations, the movement track generating module is further configured to:

when the AR coordinate system corresponding to the terminal equipment is shifted, determine image coordinates and second AR coordinates of a second positioning point, where the second positioning point includes at least two positioning points, and the second AR coordinates are coordinates in a shifted AR coordinate system of the terminal equipment; and

determine a second adjustment scale for the image coordinate system and the shifted AR coordinate system based on the image coordinates and the second AR coordinates of the second positioning point.

In some optional implementations, the movement track generating module is further configured to:

when the AR coordinate system corresponding to the terminal equipment is shifted, convert the second AR coordinates of the track point after the shift into the image coordinates of the track point after the shift based on the second adjustment scale; and

generate a movement track of the terminal equipment after the shift in the floor plan based on the image coordinates of the track point after the shift.

In some optional implementations, a coordinate conversion module is further included and configured to:

when the AR coordinate system corresponding to the terminal equipment is shifted, convert the second AR coordinates of the track point after the shift into the first AR coordinates in the initial AR coordinate system based on the first adjustment scale and the second adjustment scale; and

after the roaming test is completed, generate a roaming track corresponding to the roaming test based on first AR coordinates of all track points.

In some optional implementations, the movement track generating module is further configured to: annotate a target track point in the movement track.

In some optional implementations, the display module is further configured to: display the movement track and the detection data on a collected reality view of the detection region.

In some optional implementations, the display module is further configured to: when the reality view includes a target track point, render annotation information corresponding to the target track point in the reality view.

In some optional implementations, the target track point is determined in the following method:

in response to a user annotation instruction, determining a track point corresponding to the user annotation instruction as the target track point, where an annotation type of the target track point is a user annotation; and/or

determining, as the target track point, the track point representing AP switching, where an annotation type of the target track point is roaming.

In some optional implementations, the display module is further configured to: when the reality view includes a target region, render AP information corresponding to the target region in the reality view, where the target region is a position of an AP which the terminal equipment currently accesses.

In some optional implementations, a report generating module is further included and configured to: generate a roaming report for the detection region, where the roaming report includes a part or all of a roaming track, a number of roaming times, a signal strength change curve, and a latency change curve corresponding to the roaming test.

According to a third aspect, an embodiment of this application provides terminal equipment, including at least one processor and at least one memory, where the memory stores a computer program, and when the program is executed by the processor, the processor is enabled to perform the roaming test method according to any one implementation of the first aspect.

According to a fourth aspect, an embodiment of this application provides a computer-readable storage medium, storing a computer program that may be executed by a processor, where when the program runs on the processor, the processor is enabled to perform the roaming test method according to any one implementation of the first aspect.

According to a fifth aspect, an embodiment of this application provides a roaming test method, applied to terminal equipment and including:

performing augmented reality AR positioning on the terminal equipment to obtain AR coordinates of a track point of the terminal equipment; and determining detection data corresponding to the track point, where the AR coordinates are coordinates in an AR coordinate system of the terminal equipment, and the track point represents a position of the terminal equipment in a roaming test in a detection region; and

updating a movement track of the terminal equipment based on the AR coordinates of the track point, and displaying the movement track and the corresponding detection data.

In some optional implementations, before the updating the movement track displayed on the terminal equipment, the method further includes:

determining image coordinates of a first positioning point in ambient image data and first AR coordinates of the first positioning point in an initial AR coordinate system based on ambient image data of the detection region, where the first positioning point includes at least two first positioning sub-points; and

determining a first adjustment scale for the image coordinate system and the initial AR coordinate system based on the image coordinates of the first positioning point and the first AR coordinates of the first positioning point.

In some optional implementations, the performing the augmented reality AR positioning on the terminal equipment to obtain the AR coordinates of the track point of the mobile terminal includes:
when the AR coordinate system corresponding to the terminal equipment is not shifted, performing the AR positioning on the terminal equipment based on the initial AR coordinate system to obtain the first AR coordinates of the track point of the terminal equipment.

In some optional implementations, the first adjustment scale includes a first transverse adjustment scale and a first longitudinal adjustment scale; and
the first transverse adjustment scale is determined based on an image abscissa difference and an AR abscissa difference between different first positioning sub-points; and the first longitudinal adjustment scale is determined based on an image ordinate difference and an AR ordinate difference between different first positioning sub-points.

In some optional implementations, the converting the first AR coordinates of the track point into the image coordinates of the track point based on the first adjustment scale includes:

determining a first AR abscissa change based on a difference between a first AR abscissa of the track point and an AR abscissa of any first positioning sub-point; determining an image abscissa change based on the first AR abscissa change and the first transverse adjustment scale; and adding the image abscissa change to the image abscissa of the first positioning sub-point, to obtain the image abscissa of the track point; and

determining a first AR ordinate change based on a difference between a first AR ordinate of the track point and a first AR ordinate of any first positioning sub-point; determining an image ordinate change based on the first AR ordinate change and the first longitudinal adjustment scale; and adding the image ordinate change to the image ordinate of the first positioning sub-point, to obtain the image ordinate of the track point.

In some optional implementations, the method further includes:

when the AR coordinate system corresponding to the terminal equipment is shifted, determining image coordinates of a second positioning point and second AR coordinates of the second positioning point in the shifted AR coordinate system, where the second positioning point includes at least two second positioning sub-points; and

determining a second adjustment scale for the image coordinate system and the shifted AR coordinate system based on the image coordinates of the second positioning point and the second AR coordinates of the second positioning point.

In some optional implementations, the performing the augmented reality AR positioning on the terminal equipment to obtain the AR coordinates of the track point of the mobile terminal includes:
when the AR coordinate system corresponding to the terminal equipment is shifted, performing the AR positioning on the mobile terminal based on the shifted AR coordinate system to obtain the second AR coordinates of the track point of the mobile terminal.

In some optional implementations, the updating the movement track displayed on the terminal equipment based on the AR coordinates of the track point includes:

when the AR coordinate system corresponding to the terminal equipment is shifted, converting the second AR coordinates of the track point into the image coordinates of the track point based on the second adjustment scale; and generating a movement track of the terminal equipment in the ambient image data based on the image coordinates of the track point.

According to a sixth aspect, an embodiment of this application provides a roaming test apparatus, applied to augmented reality terminal equipment and including:

an augmented reality AR positioning module, configured to perform AR positioning on the terminal equipment to obtain AR coordinates of a track point of the terminal equipment, where the AR coordinates are coordinates in an AR coordinate system of the terminal equipment, and the track point represents a position of the terminal equipment in a roaming test in a detection region;

a test module, configured to determine detection data corresponding to the track point;

a movement track generating module, configured to update a movement track of the terminal equipment based on the AR coordinates of the track point; and

a display module, configured to display the movement track and corresponding detection data.

## BRIEF DESCRIPTION OF DRAWINGS

To describe the technical solutions in the embodiments of this application more clearly, the following briefly describes the accompanying drawings required for describing the embodiments. Apparently, the accompanying drawings in the following description show merely some embodiments of this application, and a person of ordinary skill in the art may still derive other drawings from these accompanying drawings without creative efforts.

FIG. 1 is a schematic flowchart of a first roaming test method according to an embodiment of this application;
FIG. 2 is a schematic diagram of a first user interface according to an embodiment of this application;
FIG. 3 is a schematic flowchart of a second roaming test method according to an embodiment of this application;
FIG. 4 is a schematic diagram of a second user interface according to an embodiment of this application;
FIG. 5 is a schematic flowchart of a third roaming test method according to an embodiment of this application;
FIG. 6 is a schematic diagram of a third user interface according to an embodiment of this application;
FIG. 7 is a schematic diagram of a movement track according to an embodiment of this application;
FIG. 8 is a schematic diagram of a first reality diagram according to an embodiment of this application;
FIG. 9 is a schematic diagram of a second reality diagram according to an embodiment of this application;
FIG. 10 is a schematic diagram of a third reality diagram according to an embodiment of this application;
FIG. 11 is a schematic structural diagram of a roaming test apparatus according to an embodiment of this application; and
FIG. 12 is a schematic structural diagram of terminal equipment according to an embodiment of this application.

## DESCRIPTION OF EMBODIMENTS

To make the objectives, technical solutions, and advantages of this application clearer, the following further describes this application in detail with reference to the accompanying drawings. Apparently, the described embodiments are merely some but not all of the embodiments of this application. All other embodiments obtained by a person of ordinary skill in the art based on the embodiments of this application without creative efforts shall fall within the protection scope of this application.

The terms "first" and "second" are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of this application, unless otherwise stated, "a plurality of" means at least two.

The term "and/or" describes an association relationship between associated objects and indicates that three relationships may exist. For example, A and/or B may represent the following three cases: Only A exists, both A and B exist, and only B exists. The character "/" generally indicates an "or" relationship between the associated objects.

In the description of this application, it should be noted that unless otherwise specified and defined explicitly, the term "connect" should be understood in its general senses. For example, it may refer to a direct connection, an indirect connection via an intermediate medium, or an internal communication between two components. A person of ordinary skill in the art may understand specific meanings of these terms in this application as appropriate to specific situations.

In the embodiments, "terminal equipment" is equipment carried by a user for roaming testing and may be handheld equipment such as a mobile phone.

In practice, a plurality of APs need to be deployed in some regions, and roaming tests are required to evaluate deployment statuses of the APs after the deployment.

In the related art, a tester moves within the deployment region (also known as the detection region) while carrying a mobile phone to interact with the APs to conduct roaming tests and obtain roaming test results. Then, based on the roaming test results, the tester evaluates whether the deployment of the APs is appropriate.

However, in the foregoing method, the tester may only rely on experience to carry the mobile phone around the deployment region, and there may be a test blind spot. In addition, in the foregoing method, only a change in the roaming detection data over time may be obtained, a position corresponding to the roaming detection data may not be determined, and as a result, it is difficult to accurately evaluate the deployment of the APs.

In some embodiments, a program-controlled test vehicle is controlled to run in a test scenario along a preset track, so that the program-controlled test vehicle successively establishes wireless connections with a plurality of roaming test APs in the detection region through a test wireless network interface card, to determine detection data on the preset track.

However, a control process in the foregoing method is complex and may only be implemented with assistance of an additional program-controlled test vehicle.

Exemplary embodiments of this application propose a roaming test method and apparatus, terminal equipment, and a storage medium, where the method is applied to terminal equipment and includes: performing AR positioning at a track point of the terminal equipment to obtain AR coordinates of the track point, and determining detection data corresponding to the track point, where the AR coordinates are coordinates in an AR coordinate system of the terminal equipment, and the track point is a position of the terminal equipment in a roaming test in a detection region; generating a movement track of the terminal equipment based on the AR coordinates of the track point; and displaying the movement track and the detection data.

In the foregoing solution, in the roaming test process, not only the detection data corresponding to the track point (the position of the terminal equipment) is obtained in real time, but also the AR coordinates of the track point in the AR coordinate system are obtained in real time through AR positioning, that is, detection data of each track point and the corresponding AR coordinates (position information) are obtained in real time during the roaming test, so that the deployment of the APs may be more accurately evaluated based on the detection data of the track point and the corresponding AR coordinates after the roaming test is completed. In addition, based on the AR coordinates of the track point, the movement track (updated in real time along with the movement of the terminal equipment) of the terminal equipment is generated; the reality view corresponding to the movement track, the detection data, and the detection region is displayed, and in this way, the user may obtain a test result corresponding to the tested track point based on the movement track and the detection data, and plan a subsequent test route more properly with reference to this information, to conduct the roaming test more effectively.

In a possible implementation, AR positioning may be determining a position and an orientation of the terminal equipment based on capabilities of the terminal equipment in combination with AR technology. For example, the position and the orientation of the terminal equipment may be precisely determined by using a camera, a sensor, and a computing capability of the terminal equipment in combination with augmented reality (AR) technology. For the AR positioning of the terminal equipment, the position and the orientation of the terminal equipment in the real world are usually determined by identifying a feature, a marker, or a landmark in ambience in combination with attitude perception (for example, a gyroscope and an accelerometer) and a positioning service (for example, Global Positioning System (GPS) and Wi-Fi positioning) of the terminal equipment.

Accompanying drawings and specific embodiments are used below to describe in detail the technical solution of this application and how the foregoing technical problems are resolved through the technical solution of this application. The specific embodiments below may be combined with each other, and same or similar concepts or processes may not be described again in some embodiments.

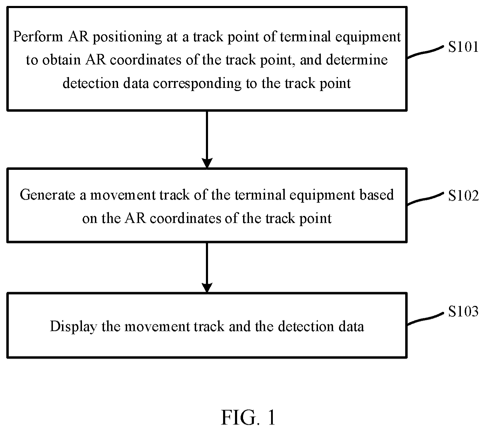

FIG. 1 is a schematic flowchart of a first roaming test method according to an embodiment of this application. As shown in FIG. 1, the first roaming test method includes the following steps.

Step S101: Perform AR positioning at a track point of terminal equipment to obtain AR coordinates of the track point, and determine detection data corresponding to the track point.

The AR coordinates are coordinates in an AR coordinate system of the terminal equipment, and the track point is a position of the terminal equipment in a roaming test in a detection region. Herein, the detection region refers to a region in which the roaming test is to be performed on the terminal equipment.

During implementation, to more accurately evaluate the deployment of the APs, both the detection data and the position information are obtained in real time.

Because an AP is usually deployed indoors to provide a wireless network for an indoor region, the roaming test is usually conducted indoors. In view of this, in this embodiment, the terminal equipment is used for the AR positioning, which is more suitable for indoor positioning.

The detection data of each track point and the corresponding AR coordinates (position information) are obtained in real time in the roaming test, so that the deployment of the APs may be more accurately evaluated based on the detection data of the track points and the corresponding AR coordinates after the roaming test is completed.

Step S102: Generate a movement track of the terminal equipment based on the AR coordinates of the track point.

During the roaming test, if the tester only relies on experience to carry the terminal equipment around, there may be a test blind spot, that is, there may be a region through which the terminal equipment has not passed; and if the track point is far away from the region, the test result is also affected.

In view of this, in this embodiment, the movement track (updated in real time along with the movement of the terminal equipment) of the terminal equipment is also generated based on the AR coordinates of the track point, so that the user learns the tested track point in a timely manner and may also learn an untested region with reference to the movement track and an overall layout of the to-be-tested region.

Step S103: Display the movement track and the detection data.

In this embodiment, after the current movement track is determined, the movement track and the detection data are displayed, so that the user may learn a test result corresponding to the tested track point based on the movement track and the detection data, and plan a subsequent test route more properly with reference to this information, to conduct the roaming test more effectively.

It may be understood that the terminal equipment is being moved around, new track points are added consecutively during the roaming test, and therefore, the movement track is generated in real time (new track points are added to a previous movement track), so that the user may learn the covered route in a timely manner.

This embodiment imposes no specific limitation on the detection data, and the detection data may be data representing a communication capability of the terminal equipment. Information such as one or more types of data including signal strength, a currently accessed AP, latency, a packet loss rate, a negotiation rate, and roaming-related information may be determined based on an interaction packet between the terminal equipment and the AP.

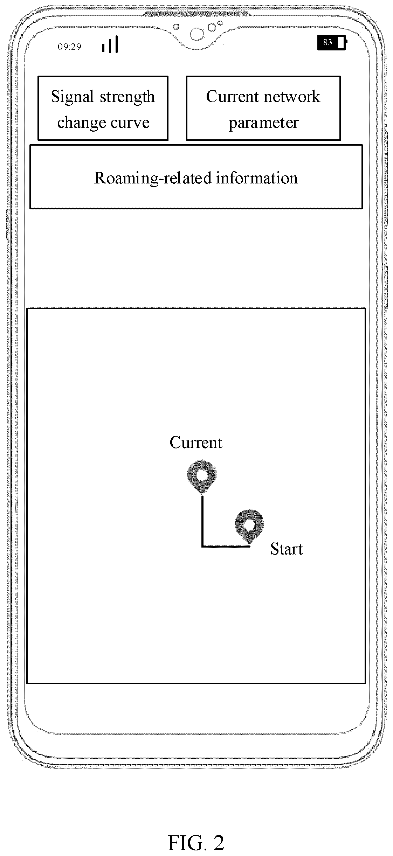

FIG. 2 shows a user interface according to this embodiment. A signal strength change curve is shown at an upper left corner of the user interface, the current network parameter is shown at an upper right corner of the user interface, and the roaming-related information is displayed below the signal strength change curve and the current network parameter, which are all detection data.

There is the current movement track below the roaming-related information in the user interface.

It may be understood that the user interface shown in FIG. 2 above is only for an exemplary illustration, and during the implementation, positions of different detection data may be switched, or the movement track is disposed at the top, and the detection data is displayed at the bottom, or the like. This embodiment imposes no specific limitation on this.

During the implementation, the terminal equipment may rotate the movement track (the movement track itself does not change) based on current direction information (direction of the terminal equipment), so that the user has a more intuitive experience. For example, when the terminal equipment turns left, the movement track also turns left and keeps extending forward from the perspective of the user. The foregoing direction information is calculated based on a current front vector and a rotation angle of the terminal equipment.

This embodiment imposes no limitation on specific implementation of the movement track, and the movement tracks may use a uniform line or use different lines based on different signal strength. For example, a green line is used for a strong signal, a yellow line is used for a moderate signal, and a red line is used for a weak signal.

In the foregoing solution, in the roaming test process, not only the detection data corresponding to the track point (the position of the terminal equipment) is obtained in real time, but also the AR coordinates of the track point in the AR coordinate system are obtained in real time through AR positioning, that is, detection data of each track point and the corresponding AR coordinates (position information) are obtained in real time during the roaming test, so that the deployment of the APs may be more accurately evaluated based on the detection data of the track point and the corresponding AR coordinates after the roaming test is completed. In addition, based on the AR coordinates of the track point, the movement track (updated in real time along with the movement of the terminal equipment) of the terminal equipment is generated; the reality view corresponding to the movement track, the detection data, and the detection region is displayed, and in this way, the user may learn a test result corresponding to the tested track point based on the movement track and the detection data, and plan a subsequent test route more properly with reference to this information, to conduct the roaming test more effectively.

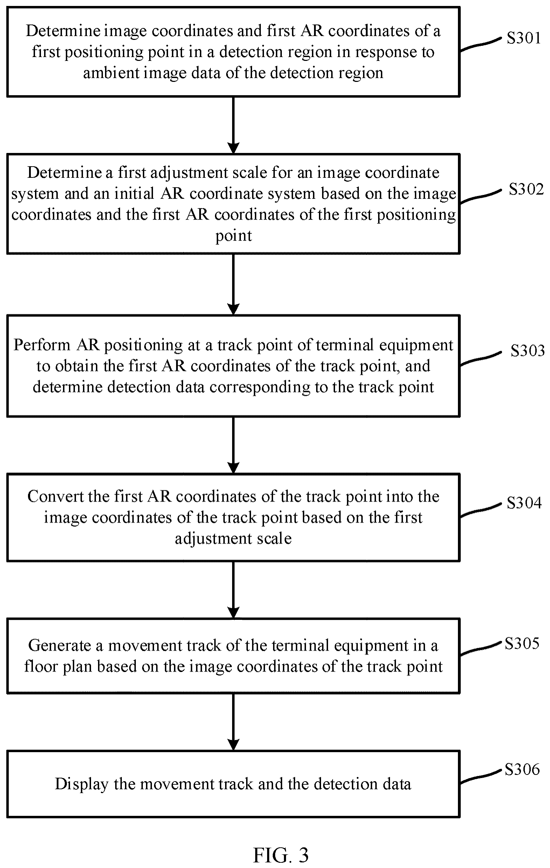

FIG. 3 is a schematic flowchart of a second roaming test method according to an embodiment of this application. As shown in FIG. 3, the second roaming test method includes the following steps.

Step S301: Determine image coordinates and first AR coordinates of a first positioning point in the detection region in response to ambient image data of the detection region. In this embodiment, the ambient image data is used as a floor plan for specific illustration.

The first positioning point includes at least two first positioning sub-points, the image coordinates are coordinates in an image coordinate system of the floor plan, and the first AR coordinates are coordinates in an initial AR coordinate system of the terminal equipment. When the augmented reality AR function is used on the terminal equipment, the AR analyzes an image of the real world captured by a camera, identifies feature points, markers, or landmarks in the environment, as well as sensor data, and performs calculation through a series of algorithms. These feature points may be patterns on walls, marks on the ground, edges of objects, and the like. Identification of these feature points may help determine coordinates and a position of the mobile phone to determine a position of the terminal equipment. With the AR function, the terminal equipment may determine a preset position as a start position based on rules of creating the AR coordinate system by the terminal equipment, coordinates of the start position may be (0, 0, 0), and then the terminal equipment establishes its own initial AR coordinate system with reference to the positioning point. There may also be various methods of establishing the AR coordinate system. This embodiment of this application imposes no limitation on this.

During the implementation, the floor plan of the detection region may be uploaded in the terminal equipment, or a plurality of floor plans are preconfigured in the terminal equipment for the user to choose. The floor plan includes an indoor distribution structure of the detection region, and therefore, the movement track is generated in the floor plan, so that the user may be more effectively guided to plan a subsequent test route. A person skilled in the art may understand that the floor plan image in this embodiment may also be other ambient image data.

However, for the AR coordinate system used for the positioning of the terminal equipment, when the AR coordinate system corresponding to the terminal equipment is not shifted, the initial AR coordinate system is used; or if the floor plan is an image, the image coordinate system is used; and the movement track may be generated in the floor plan only when image coordinates of the track point in the image coordinate system are determined.

In view of this, in this embodiment, at least two first positioning sub-points are used and the image coordinates and the first AR coordinates of the first positioning point are determined; and then an adjustment scale of the image coordinate system and the initial AR coordinate system is determined, and the coordinates may be converted based on the adjustment scale.

In this embodiment of this application, in a possible implementation, when the AR coordinate system is a three-dimensional coordinate system, to determine the adjustment scale, a coordinate representing a height in the AR coordinate system may be removed from a top view to obtain a two-dimensional AR coordinate system, and then based on the coordinates of the first positioning point in the two-dimensional AR coordinate system, the adjustment scale relative to the image coordinate system is determined.

Step S302: Determine a first adjustment scale for the image coordinate system and the initial AR coordinate system based on the image coordinates and the first AR coordinates of the first positioning point.

As described above, the image coordinates and the first AR coordinates of the first positioning point are determined; and then an adjustment scale of the image coordinate system and the initial AR coordinate system is determined, and the coordinates may be converted based on the adjustment scale.

Exemplarily, the first adjustment scale may include a first transverse adjustment scale and a first longitudinal adjustment scale; the first transverse adjustment scale is determined based on an image abscissa difference and a first AR abscissa difference between different first positioning points; and the first longitudinal adjustment scale is determined based on an image ordinate difference and a first AR ordinate difference between different first positioning sub-points.

A specific example is used below for description:
Coordinates of a first positioning sub-point 11 in the image coordinate system are $(a\_11, b\_11)$, and coordinates in the initial AR coordinate system are $(X\_11, Y\_11)$; and coordinates of a second positioning sub-point 12 in the image coordinate system are $(a\_12, b\_12)$, and coordinates in the initial AR coordinate system are $(X\_12, Y\_12)$.

The first transverse adjustment scale $K\_x=(a\_12-a\_11)/(X\_12-X\_11)$; and the first longitudinal adjustment scale $K\_y=(b\_12-b\_11)/(Y\_12-Y\_11)$.

In the foregoing example, two first positioning sub-points are used for illustration, and during implementation, more first positioning sub-points may be used. For example, the first transverse adjustment scale and the first longitudinal adjustment scale are determined based on different first positioning sub-points. Alternatively, first transverse adjustment scales and first longitudinal adjustment scales corresponding to each two first positioning sub-points may be determined and combined to obtain the final first transverse adjustment scale and first longitudinal adjustment scale. For example, the first transverse adjustment scales corresponding to each two first positioning points are averaged to obtain the final first transverse adjustment scale, and the first longitudinal adjustment scales corresponding to each two first positioning sub-points are averaged to obtain the final first longitudinal adjustment scale, and so on.

Step S303: Perform AR positioning at a track point of terminal equipment to obtain the first AR coordinates of the track point, and determine detection data corresponding to the track point.

For the specific implementation of step S303, refer to the foregoing embodiments. Details are not described herein again.

Step S304: Convert the first AR coordinates of the track point into the image coordinates of the track point based on the first adjustment scale.

Because the first adjustment scale characterizes a conversion relationship between the AR coordinate system and the image coordinate system, the first AR coordinates of the track point may be converted into the image coordinates of the track point in the foregoing floor plan based on the first adjustment scale.

Exemplarily, the first adjustment scale may include a first transverse adjustment scale and a first longitudinal adjustment scale.

A first AR abscissa change is determined based on a difference between a first AR abscissa of the track point and a first AR abscissa of any first positioning sub-point; a first image abscissa change is determined based on the first AR abscissa change and the first transverse adjustment scale; and the first image abscissa change is added to the image abscissa of the foregoing first positioning sub-point, to obtain the image abscissa of the track point.

A first AR ordinate change is determined based on a difference between a first AR ordinate of the track point and a first AR ordinate of any first positioning sub-point; a first image ordinate change is determined based on the first AR ordinate change and the first longitudinal adjustment scale; and the first image ordinate change is added to the image ordinate of the first positioning sub-point, to obtain the image ordinate of the track point.

For example, coordinates of a first positioning sub-point 11 in the image coordinate system are $(a\_11, b\_11)$, and coordinates in the initial AR coordinate system are $(X\_11, Y\_11)$.

The image abscissa of the track point m meets that $a\_m=K\_x(X\_m-X\_11)+a\_11$, where $K\_x$ is the first transverse adjustment scale, $X\_m$ is the first AR abscissa of the track point m, $X\_11$ is a first AR abscissa of the first positioning point 11, and $a\_11$ is an image abscissa of the first positioning sub-point 11.

The image ordinate of the track point m meets that $b\_m=K\_y(Y\_mY\_11)+b\_11$, where $K\_y$ is the first longitudinal adjustment scale, $Y\_m$ is the first AR ordinate of the track point m, $Y\_11$ is a first AR ordinate of the first positioning point 11, and $b\_11$ is an image ordinate of the first positioning sub-point 11.

Step S305: Generate a movement track of the terminal equipment in a floor plan based on the image coordinates of the track point.

Because the image coordinates of the track point are the coordinates in the image coordinate system of the floor plan, the movement track of the terminal equipment may be generated by connecting points in the floor plan based on the image coordinates of the track point.

Step S306: Display the movement track and the detection data.

In this embodiment, the movement track is formed in the floor plan, and therefore, displaying the movement track is displaying the floor plan containing the movement track.

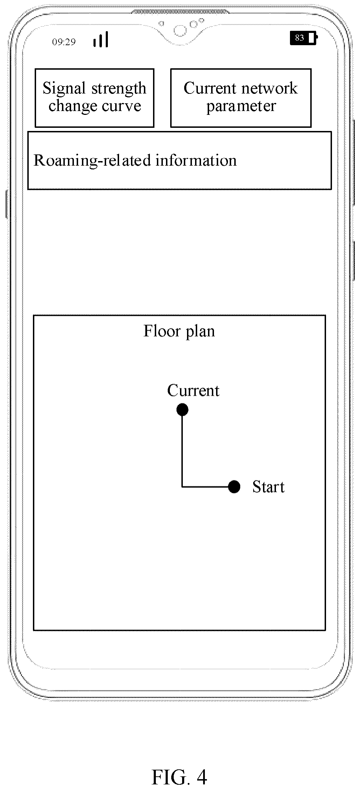

FIG. 4 shows a user interface according to an embodiment. The movement track in the user interface is generated in the floor plan.

The user interface shown in the foregoing FIG. 4 is also used for exemplary illustration, and the floor plan and the position of the detection data may be switched. In addition, the user interface may display the entire floor plan or part of the floor plan (if the floor plan is large, only part of the floor plan may be displayed). This embodiment imposes no specific limitation on this.

In the foregoing solution, the AR coordinate system is used for the positioning of the terminal equipment. The floor plan is an image, and the image coordinate system is used. At least two first positioning sub-points are used, and the image coordinates and the first AR coordinates of the first positioning sub-points are determined. Then the first adjustment scale of the image coordinate system and the initial AR coordinate system is determined, the first AR coordinates of the track point are converted based on the first adjustment scale, the coordinates in the image coordinate system of the floor plan may be obtained, then the movement track is generated in the floor plan, and the floor plan includes an indoor distribution structure of the detection region, which may more effectively guide the user to plan a subsequent test route.

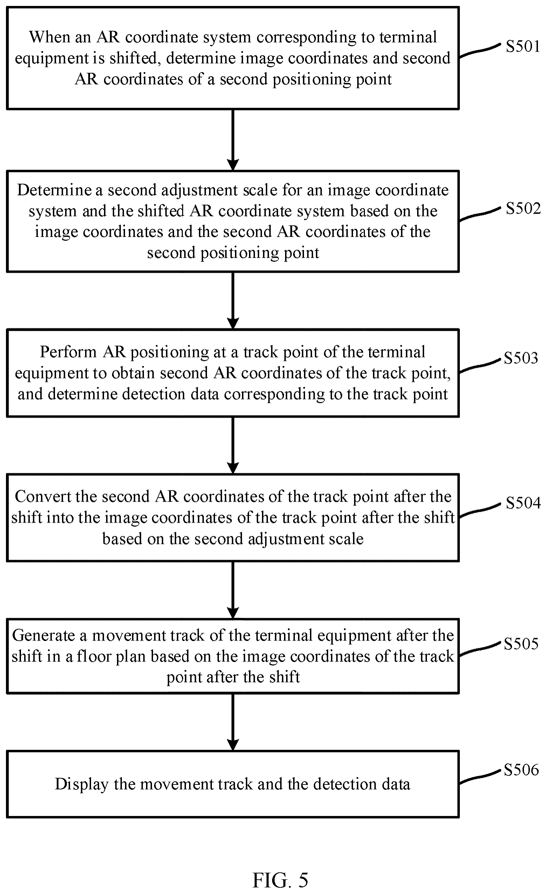

FIG. 5 is a schematic flowchart of a third roaming test method according to an embodiment of this application. As shown in FIG. 5, the third roaming test method includes the following steps.

Step S501: When an AR coordinate system corresponding to terminal equipment is shifted, determine image coordinates and second AR coordinates of a second positioning point.

The second positioning point includes at least two second positioning sub-points, and the second AR coordinates are coordinates in a shifted AR coordinate system of the terminal equipment.

During the implementation, when the AR coordinate system corresponding to the terminal equipment is shifted, a conversion relationship between the AR coordinate system and the image coordinate system also changes.

In view of this, in this embodiment, at least two second positioning sub-points are used and the image coordinates and the second AR coordinates of the second positioning sub-points are determined; and then an adjustment scale of the image coordinate system and the shifted AR coordinate system is determined, and the coordinates may be converted based on the adjustment scale.

This embodiment imposes no specific limitation on a method in which the terminal equipment determines whether the AR coordinate system is shifted. Examples are as follows:

1. The terminal equipment collects an image during the AR positioning, and if the image collected by the terminal equipment includes no relevant feature points, it is determined that the AR coordinate system is shifted.
2. When sensing that a current position in the movement track is inconsistent with an actual position, the user triggers an instruction representing the shift, and the terminal equipment determines that the AR coordinate system is shifted in response to the instruction.

Step S502: Determine a second adjustment scale for the image coordinate system and the shifted AR coordinate system based on the image coordinates and the second AR coordinates of the second positioning point.

As described above, the image coordinates and the second AR coordinates of the second positioning point are determined; and then an adjustment scale of the image coordinate system and the shifted AR coordinate system is determined, and the coordinates of the track point after the shift may be converted based on the adjustment scale.

Exemplarily, the second adjustment scale may include a second transverse adjustment scale and a second longitudinal adjustment scale; the second transverse adjustment scale is determined based on an image abscissa difference and a second AR abscissa difference between different second positioning sub-points; and the second longitudinal adjustment scale is determined based on an image ordinate difference and a second AR ordinate difference between different second positioning sub-points. A determining method is similar to that of the foregoing first adjustment scale. Details are not described herein again.

Step S503: Perform AR positioning at a track point of the terminal equipment to obtain second AR coordinates of the track point, and determine detection data corresponding to the track point.

For the specific implementation of step S503, refer to the foregoing embodiments. Details are not described herein again.

Step S504: Convert the second AR coordinates of the track point after the shift into the image coordinates of the track point after the shift based on the second adjustment scale.

Because the second adjustment scale characterizes a conversion relationship between the shifted AR coordinate system and the image coordinate system, the second AR coordinates of the track point after the shift may be converted into the image coordinates of the track point in the foregoing floor plan based on the second adjustment scale.

Exemplarily, the second adjustment scale may include a second transverse adjustment scale and a second longitudinal adjustment scale.

A second AR abscissa change is determined based on a difference between a second AR abscissa of the track point and a second AR abscissa of any second positioning sub-point; a second image abscissa change is determined based on the second AR abscissa change and the second transverse adjustment scale; and the second image abscissa change is added to the image abscissa of the foregoing second positioning sub-point, to obtain the image abscissa of the track point.

A second AR ordinate change is determined based on a difference between a second AR ordinate of the track point and a second AR ordinate of any second positioning sub-point; a second image ordinate change is determined based on the second AR ordinate change and the second longitudinal adjustment scale; and the second image ordinate change is added to the image ordinate of the second positioning sub-point, to obtain the image ordinate of the track point.

For example, coordinates of the second positioning sub-point 21 in the image coordinate system are $(a\_21, b\_21)$, and coordinates in the shifted AR coordinate system are $(X\_21, Y\_21)$.

The image abscissa of the track point n meets that $a\_n=K'\_x(X'\_n-X\_21)+a\_21$, where $K'\_x$ is the second transverse adjustment scale, $X'\_n$ is the second AR abscissa of the track point n, $X\_21$ is a first AR abscissa of the second positioning sub-point 21, and $a\_21$ is an image abscissa of the second positioning sub-point 21.

The image ordinate of the track point n meets that $b\_n=K'\_y (Y'\_n-Y\_21)+b\_21$, where $K'\_y$ is the second longitudinal adjustment scale, $Y'\_n$ is the second AR ordinate of the track point n, $Y\_21$ is a first AR ordinate of the second positioning sub-point 21, and $b\_21$ is an image ordinate of the second positioning sub-point 21.

Step S505: Generate a movement track of the terminal equipment after the shift in a floor plan based on the image coordinates of the track point after the shift.

Because the image coordinates of the track point are the coordinates in the image coordinate system of the floor plan, the movement track of the terminal equipment may be generated by connecting points in the floor plan based on the image coordinates of the track point.

As described above, the terminal equipment is being moved around, new track points are added consecutively during the roaming test, the movement track is generated in real time (new track points are added to a previous movement track), and therefore, in this embodiment, there is also a generating process and a display process of the movement track before thshift. For details, refer to the foregoing embodiments. Details are not described herein again.

Step S506: Display the movement track and the detection data.

For the specific implementation of step S506, refer to the foregoing embodiments. Details are not described herein again.

In the foregoing solution, after the AR coordinate system corresponding to the terminal equipment is shifted, a conversion relationship between the AR coordinate system and the image coordinate system also changes, and the previous first adjustment scale is no longer applicable. After theshift, at least two second positioning sub-points are used, and the image coordinates and the second AR coordinates (coordinates in the shifted AR coordinate system) of the second positioning points are determined. Then the second adjustment scale of the image coordinate system and theshifted AR coordinate system is determined, the second AR coordinates of the track point afteshift are converted based on the second adjustment scale, the coordinates in the image coordinate system of the floor plan may be obtained, and then the movement track is generated in the floor plan, so that the movement track may also be precisely generated in the AR shift scenario.

In some optional embodiments, in a case that the AR coordinate system corresponding to the terminal equipment isshifted, the following steps are also performed:

converting the second AR coordinates of the track point after the shift into the first AR coordinates in the initial AR coordinate system based on the first adjustment scale and the second adjustment scale; and

after the roaming test is completed, generating a roaming track corresponding to the roaming test based on first AR coordinates of all track points.

During the implementation, when the AR coordinate system corresponding to the terminal equipment is shifted in the roaming test process, the AR coordinates of the track point are not the AR coordinates in the initial AR coordinate system. The second AR coordinates of the track point after the shift need to be converted into the first AR coordinates in the initial AR coordinate system to obtain AR coordinates of all track points under a uniform coordinate standard in the roaming test process. Certainly, the first AR coordinates may also be converted into the second AR coordinates, as long as, in principle, the AR coordinates of all the track points are the coordinates in the same AR coordinate system.

Exemplarily, for the track point n, the image coordinates determined based on the first adjustment scale and the first AR coordinates are theoretically the same as the image coordinates determined based on the second adjustment scale and the second AR coordinates, and therefore, the corresponding first AR coordinates may be determined based on the first adjustment scale, the second adjustment scale, and the second AR coordinates.

For a method for determining the first adjustment scale and the second adjustment scale, refer to the foregoing embodiments. Details are not described herein again.

A specific example is used below to describe conversion of the AR coordinate system:

$$a\_n = K\_x(X\_n – X\_11) + a\_11 = K'\_x (X'\_n – X\_21) + a\_21;$$

and

$$b\_n = K\_y(Y\_n – Y\_11) + b\_11 = K'\_y (Y\_n – Y\_21) + b\_21.$$

It may be inferred from the foregoing two formulas that $X\_n = (X'\_n - X\_21)K'\_x/K\_x + (a\_21 - a\_11)/K\_x + X\_11$; and

$$Y\_n = (Y'\_n – Y\_21)K'\_y/K\_y + (b\_21 – b\_11)/K\_y + Y\_11.$$

The coordinates of the first positioning point 11 in the image coordinate system are $(a\_11, b\_11)$, and the coordinates in the initial AR coordinate system are $(X\_11, Y\_11)$; the coordinates of the second positioning point 21 in the image coordinate system are $(a\_21, b\_21)$, and the coordinates in the shifted AR coordinate system are $(X\ 21, Y\_21)$; and $K\_x$ is the first transverse adjustment scale, $K\_y$ is the first longitudinal adjustment scale, $K'\_x$ is the second transverse adjustment scale, $K'\_y$ is the second longitudinal adjustment scale, the coordinates of the track point n in the shifted AR coordinate system are $(X'\_n, Y'\_n)$, and the coordinates in the initial AR coordinate system are $(X\_n, Y\_n)$.

After the roaming test is completed, roaming tracks are generated in the uniform coordinate system based on first AR coordinates of all track points in the initial AR coordinate system.

It may be understood that the foregoing movement track is a real-time track, and the roaming track is an overall track.

Because the roaming track is generated for the entire roaming test based on the AR coordinates meeting the uniform coordinate standard, a roaming report may be generated based on the roaming track, and subsequently, an anomaly may be identified based on the roaming report.

In the foregoing solution, when the AR coordinate system corresponding to the terminal equipment is shifted in the roaming test process, the AR coordinates of the track point are not the AR coordinates in the uniform AR coordinate system. The second AR coordinates of the track point after the shift are converted into the first AR coordinates in the initial AR coordinate system to obtain the first AR coordinates of all track points under a uniform coordinate standard in the roaming test process, thereby generating the roaming track for the entire roaming test in the uniform coordinate system.

In some optional implementations, the displaying the movement track and the detection data further includes: displaying the movement track and the detection data on a collected reality view of the detection region.

That is, in this embodiment, not only the movement track and the detection data are displayed, but also the reality view, collected by the terminal equipment, of the detection region is displayed. For example, the image is collected through the camera of the terminal equipment to obtain a reality view of the front of the terminal equipment.

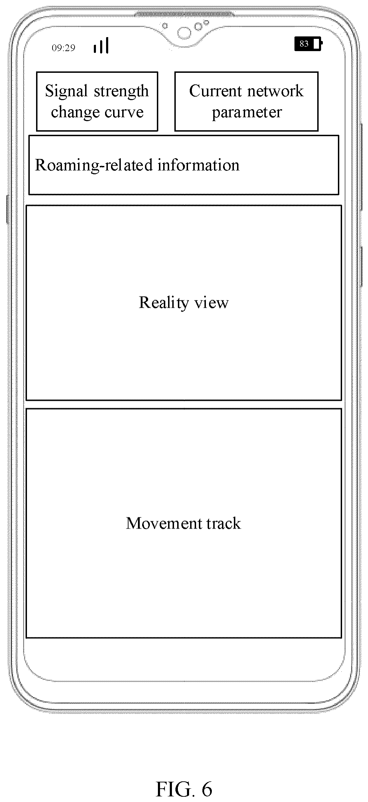

As shown in FIG. 6, the reality view is displayed below the detection data and above the movement track.

It may be understood that the user interface shown in FIG. 6 above is only for an exemplary illustration, during the implementation, positions of different detection data may be switched, or positions of the detection data, the movement track, and the reality view may also be switched, and so on. In addition, these three entries of information also may not be displayed side by side. For example, the movement track is overlaid on the reality view, occupying a partial region of the reality view, and so on. This embodiment imposes no specific limitation on this.

In the foregoing solution, the collected reality view of the detection region is displayed, so that the user may plan the route more properly, for example, avoidance of an obstacle and a travel to a specific region, based on the reality view of the front.

In some optional implementations, some track points may be marked to obtain a target track point, and the target track point may be determined in methods including, but not limited to, the following method:

in response to a user annotation instruction, determining a track point corresponding to the user annotation instruction as the target track point, where an annotation type of the target track point is a user annotation; and/or

determining, as the target track point, the track point representing AP switching, where an annotation type of the target track point is roaming.

Exemplarily, if the user wants to annotate a specific track point such as a track point with a weak signal or a track point with an abnormal signal, the user may trigger the user annotation instruction, for example, click a corresponding position of the target track point in the user interface of the terminal equipment and enter annotation content; and the terminal equipment determines the track point corresponding to the user annotation instruction as a target track point, and the annotation type of the target track point is the user annotation.

If the terminal equipment determines that AP switching occurs at a specific track point, the terminal equipment determines the track point as the target track point, and the annotation type of the target track point is the roaming.

In some optional implementations, based on the foregoing embodiment, the following step is also performed: annotating a target track point in the movement track.

As described above, there are multiple types of target track points such as a target track point annotated by the user and a target track point in the roaming, the target track point is annotated with a special symbol in the movement track, and a corresponding type may also be added.

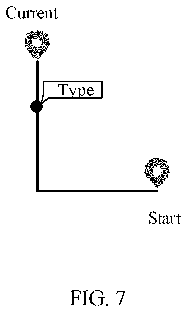

As shown in FIG. 7, the target track point is annotated with a dot in the movement track, and a corresponding type is added in a form of a dialog box.

In the foregoing solution, the target track point is annotated in the movement track, to record some positions needing special attention in the track.

In some optional implementations, based on the foregoing embodiment, the following step is also performed: when the reality view includes a target track point, rendering annotation information corresponding to the target track point in the reality view.

In this embodiment, the reality view is displayed, and if the reality view includes a target track point, the annotation information corresponding to the target track point may be rendered in the reality view to perform AR annotation. In addition, the reality view may be a two-dimensional image or a three-dimensional image. This embodiment of this application imposes no limitation on this.

This embodiment imposes no specific limitation on the annotation information. For example, because there are multiple types of target track points such as the target track point annotated by the user and the target track point in the roaming, the annotation information may include corresponding types. In addition, for the target track point annotated by the user, the annotation information may also include the annotation content; and for the target track point in the roaming, the annotation information may also include roaming-related information such as an original AP, an AP accessed after switching, and a switching parameter.

During implementation, a movement path may also be rendered in the reality view.

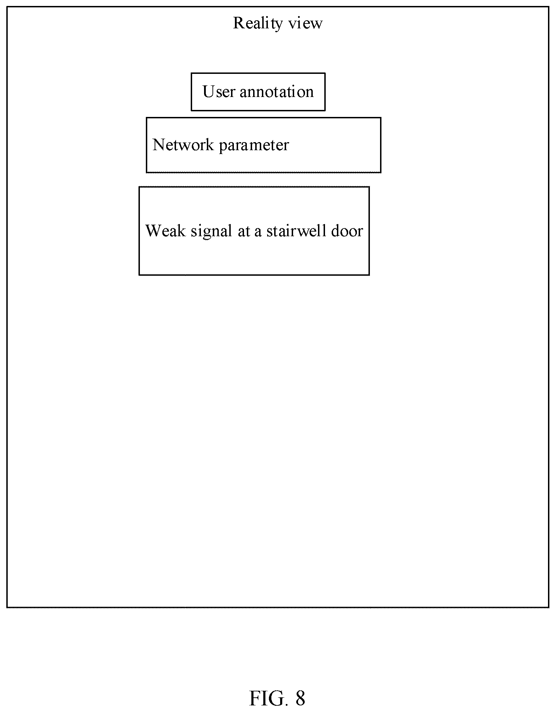

Referring to FIG. 8, for the target track point annotated by the user, the type of the target track point, a network parameter of the target track point, and the annotation content are rendered in the reality view. In FIG. 8, "weak signal at a stairwell door" is used as an example, and the user may enter other annotation content during the implementation.

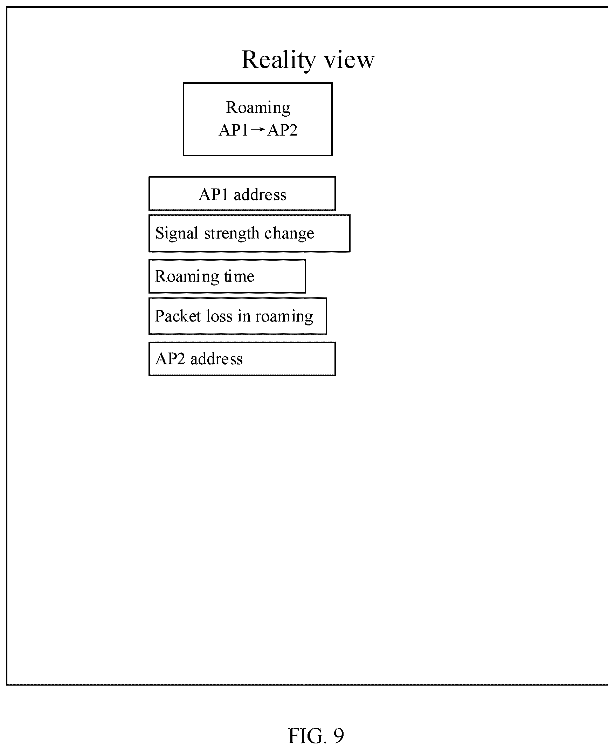

As shown in FIG. 9, for the target track point in the roaming, the type of the target track point, switching from AP1 to AP2, AP1 address, AP2 address, a switching parameter, and the like are rendered in the reality view. In FIG. 9, switching parameters including a signal strength change, roaming time, and packet loss in roaming are used as an example.

In the foregoing solution, the AR annotation is implemented by rendering the annotation information corresponding to the target track point in the reality view, to more intuitively display a position needing special attention.

In some optional implementations, based on the foregoing embodiment, the following step is also performed: when the reality view includes a target region, rendering AP information corresponding to the target region in the reality view, where the target region is a position of an AP which the terminal equipment currently accesses.

During implementation, the user may not be clear about the specific position of the AP deployment, and in view of this, the position of the AP which the terminal equipment currently accesses is rendered in the reality view in this embodiment.

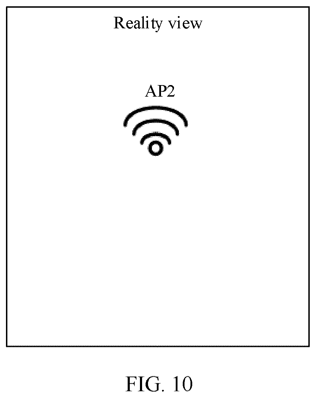

As shown in FIG. 10, the terminal equipment currently accesses the AP2, and the corresponding AP information is rendered at the position of the AP2 in the reality view. In FIG. 10, the AP information including the AP which the terminal equipment currently accesses and the symbol corresponding to the AP is used as an example.

In the foregoing solution, the AP information corresponding to the position of the AP which the terminal equipment currently accesses is rendered in the reality view, and the user is notified of the position of the AP to further guide the user to properly plan a roaming route.

In some optional implementations, based on the foregoing embodiment, the following step is also performed:

generating a roaming report for the detection region, where
the roaming report includes a part or all of a roaming track, a number of roaming times, a signal strength change curve, and a latency change curve corresponding to the roaming test.

For the method of generating the roaming track, refer to the foregoing embodiments. The number of roaming times is the number of switching times of the AP accessed for the AR during the roaming test, the signal strength change curve shows a change in signal strength over time, and the latency change curve shows a change in latency over time.

In this embodiment, the roaming report is generated, and based on the report, a position with a roaming anomaly and a position with a network anomaly and fluctuation may be subsequently inferred, to provide better signal coverage.

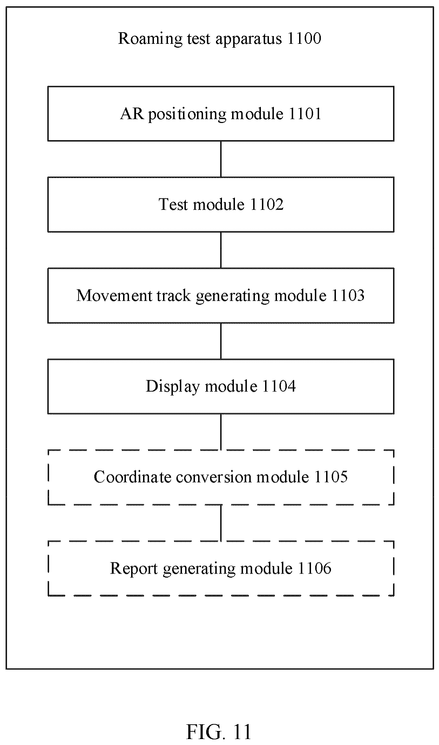

As shown in FIG. 11, an embodiment of this application provides a roaming test apparatus 1100, applied to terminal equipment, where the apparatus includes:

an AR positioning module 1101, configured to perform AR positioning at a track point of the terminal equipment to obtain AR coordinates of the track point, where the AR coordinates are coordinates in an AR coordinate system of the terminal equipment, and the track point is a position of the terminal equipment in a roaming test in a detection region;
a test module 1102, configured to determine detection data corresponding to the track point;
a movement track generating module 1103, configured to generate a movement track of the terminal equipment based on the AR coordinates of the track point; and
a display module 1104, configured to display the movement track and the detection data.

In some optional implementations, before generating the movement track of the terminal equipment, the movement track generating module 1103 is further configured to:

determine image coordinates and first AR coordinates of a first positioning point in the detection region in response to a floor plan of the detection region, where the first positioning point includes at least two positioning points, the image coordinates are coordinates in an image coordinate system of the floor plan, and the first AR coordinates are coordinates in an initial AR coordinate system of the terminal equipment; and
determine a first adjustment scale for the image coordinate system and the initial AR coordinate system based on the image coordinates and the first AR coordinates of the first positioning point.

The movement track generating module 1103 is specifically configured to:

when the AR coordinate system corresponding to the terminal equipment is not shifted, convert the first AR coordinates of the track point into the image coordinates of the track point based on the first adjustment scale; and
generate a movement track of the terminal equipment in a floor plan based on the image coordinates of the track point.

In some optional implementations, the movement track generating module 1103 is further configured to:

when the AR coordinate system corresponding to the terminal equipment is shifted, determine image coordinates and second AR coordinates of a second positioning point, where the second positioning point includes at least two positioning points, and the second AR coordinates are coordinates in a shifted AR coordinate system of the terminal equipment; and
determine a second adjustment scale for the image coordinate system and the shifted AR coordinate system based on the image coordinates and the second AR coordinates of the second positioning point.

In some optional implementations, the movement track generating module 1103 is further configured to:

when the AR coordinate system corresponding to the terminal equipment is shifted, convert the second AR coordinates of the track point after the shift into the image coordinates of the track point after the shift based on the second adjustment scale; and
generate a movement track of the terminal equipment after the shift in a floor plan based on the image coordinates of the track point after the shift.

In some optional implementations, a coordinate conversion module 1105 is further included and configured to:

when the AR coordinate system corresponding to the terminal equipment is shifted, convert the second AR coordinates of the track point after the shift into the first AR coordinates in the initial AR coordinate system based on the first adjustment scale and the second adjustment scale; and
after the roaming test is completed, generate a roaming track corresponding to the roaming test based on first AR coordinates of all track points.

In some optional implementations, the movement track generating module 1103 is further configured to: annotate a target track point in the movement track.

In some optional implementations, the display module 1104 is further configured to: display the movement track and the detection data on a collected reality view of the detection region.

In some optional implementations, the display module 1104 is further configured to: when the reality view includes a target track point, render annotation information corresponding to the target track point in the reality view.

In some optional implementations, the target track point is determined in the following method:

in response to a user annotation instruction, determining a track point corresponding to the user annotation instruction as the target track point, where an annotation type of the target track point is a user annotation; and/or
determining, as the target track point, the track point representing AP switching, where an annotation type of the target track point is roaming.

In some optional implementations, the display module 1104 is further configured to: when the reality view includes a target region, render AP information corresponding to the target region in the reality view, where the target region is a position of an AP which the terminal equipment currently accesses.

In some optional implementations, a report generating module 1106 is further included and configured to: generate a roaming report for the detection region, where the roaming report includes a part or all of a roaming track, a number of roaming times, a signal strength change curve, and a latency change curve corresponding to the roaming test.

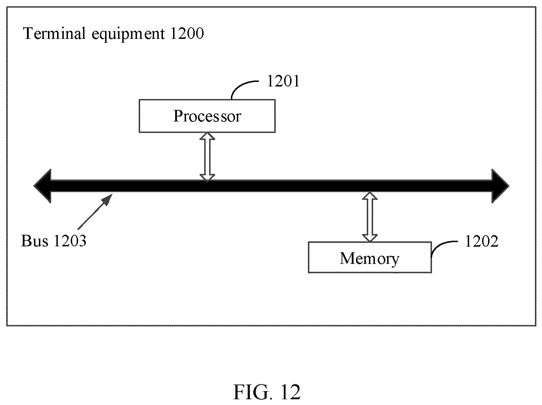

Based on the same technical concept, an embodiment of this application further provides terminal equipment 1200. As shown in FIG. 12, the terminal equipment 1200 includes at least one processor 1201 and a memory 1202 connected to the at least one processor. A specific connection medium between the processor 1201 and the memory 1202 is not limited in this embodiment of this application. For example, in FIG 12, the processor 1201 and the memory 1202 are connected via a bus 1203. The bus may be an address bus, a data bus, a control bus, and the like. For ease of representation, only one bold line is used to represent the bus in FIG. 12, but this does not mean that there is only one bus or only one type of bus.

The processor 1201 is a control center of the terminal equipment, and may be connected to components of the terminal equipment through various interfaces and lines, and run or execute instructions stored in the memory 1202 and invoke data stored in the memory 1202, to implement data processing. Optionally, the processor 1201 may include one or more processing units. An application processor and a modem processor may be integrated into the processor 1201. The application processor mainly processes an operating system, a user interface, an application program, and the like. The modem processor mainly processes an allocated instruction. It may be understood that the modem processor also may not be integrated in the processor 1201. In some embodiments, the processor 1201 and the memory 1202 may be implemented on a same chip. In some embodiments, the processor 1201 and the memory 1202 may also be implemented separately on separate chips.

The processor 1201 may be a general-purpose processor such as a central processing unit (CPU), a digital signal processor, an application-specific integrated circuit (ASIC), a field programmable gate array or another programmable logic device, a discrete gate or transistor logic device, or a discrete hardware component, which may implement or perform the methods, steps, or logic block diagrams disclosed in the embodiments of this application. The general-purpose processor may be a microprocessor or any conventional processor or the like. Steps of the methods disclosed with reference to the embodiments of the roaming test method may be directly performed and completed by using a hardware processor, or may be performed and completed by using a combination of a hardware module and a software module in the processor.

As a non-volatile computer-readable storage medium, the memory 1202 may be configured to store non-volatile software programs, non-volatile computer-executable programs, and modules. The memory 1202 may include at least one type of storage medium, for example, may include a flash memory, a hard disk, a multimedia card, a memory card, a random access memory (RAM), a static random access memory (SRAM), a programmable read-only memory (PROM), a read-only memory (ROM), an electrically erasable programmable read-only memory (EEPROM), a magnetic memory, a magnetic disk, an optical disc, or the like. The memory 1202 is, but not limited to, any other medium that may be used to carry or store desired program code in a form of an instruction or a data structure and may be accessed by a computer. The memory 1202 in the embodiments of this application may alternatively be a circuit or any other apparatus that may implement a storage function, and is configured to store program instructions and/or data.

In this embodiment of this application, the memory 1202 stores a computer program, and when the program is executed by the processor 1201, the processor 1201 is configured to:

perform AR positioning at a track point of the terminal equipment to obtain AR coordinates of the track point; and determine detection data corresponding to the track point, where the AR coordinates are coordinates in an AR coordinate system of the terminal equipment, and the track point is a position of the terminal equipment in a roaming test in a detection region; and
generate a movement track of the terminal equipment based on the AR coordinates of the track point, and display the movement track and the detection data.

In some optional implementations, before generating the movement track of the terminal equipment, the processor 1201 is further configured to:

determine image coordinates and first AR coordinates of a first positioning point in the detection region in response to a floor plan of the detection region, where the first positioning point includes at least two positioning points, the image coordinates are coordinates in an image coordinate system of the floor plan, and the first AR coordinates are coordinates in an initial AR coordinate system of the terminal equipment; and
determine a first adjustment scale for the image coordinate system and the initial AR coordinate system based on the image coordinates and the first AR coordinates of the first positioning point.

The processor 1201 is specifically configured to:

when the AR coordinate system corresponding to the terminal equipment is not shifted, convert the first AR coordinates of the track point into the image coordinates of the track point based on the first adjustment scale; and generate a movement track of the terminal equipment in a floor plan based on the image coordinates of the track point.

In some optional implementations, the processor 1201 is further configured to:

when the AR coordinate system corresponding to the terminal equipment is shifted, determine image coordinates and second AR coordinates of a second positioning point, where the second positioning point includes at least two positioning points, and the second AR coordinates are coordinates in a shifted AR coordinate system of the terminal equipment; and
determine a second adjustment scale for the image coordinate system and the dshifted AR coordinate system based on the image coordinates and the second AR coordinates of the second positioning point.

The processor 1201 is further configured to:

when the AR coordinate system corresponding to the terminal equipment is shifted, convert the second AR coordinates of the track point after the shift into the image coordinates of the track point after the shift based on the second adjustment scale; and
generate a movement track of the terminal equipment after the shift in a floor plan based on the image coordinates of the track point after the shift.

In some optional implementations, when the AR coordinate system corresponding to the terminal equipment is shifted, the processor 1201 is further configured to:

convert the second AR coordinates of the track point after the shift into the first AR coordinates in the initial AR coordinate system based on the first adjustment scale and the second adjustment scale; and
after the roaming test is completed, generate a roaming track corresponding to the roaming test based on first AR coordinates of all track points.

In some optional implementations, the processor 1201 is further configured to:
annotate a target track point in the movement track.
In some optional implementations, the processor 1201 is further configured to:
display the movement track and the detection data on a collected reality view of the detection region.

In some optional implementations, the processor 1201 is further configured to:
when the reality view includes a target track point, render annotation information corresponding to the target track point in the reality view.

In some optional implementations, the target track point is determined in the following method:

in response to a user annotation instruction, determining a track point corresponding to the user annotation instruction as the target track point, where an annotation type of the target track point is a user annotation; and/or
determining, as the target track point, the track point representing AP switching, where an annotation type of the target track point is roaming.

In some optional implementations, the processor 1201 is further configured to:
when the reality view includes a target region, render AP information corresponding to the target region in the reality view, where the target region is a position of an AP which the terminal equipment currently accesses.

In some optional implementations, the processor 1201 is further configured to:
generate a roaming report for the detection region, where the roaming report includes a part or all of a roaming track, a number of roaming times, a signal strength change curve, and a latency change curve corresponding to the roaming test.

Based on the same technical concept, an embodiment of this application further provides a computer-readable storage medium, storing a computer program that may be executed by a processor, where when the program runs on the processor, the processor is enabled to perform steps of the foregoing roaming test method.

A person skilled in the art should understand that the embodiments of this application may be provided as a method, a system, or a computer program product. Therefore, this application may be implemented in a form of a hardware-only embodiment, a software-only embodiment, or an embodiment with a combination of software and hardware. In addition, this application may be implemented in a form of a computer program product that is implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the other programmable data processing device generate an apparatus for implementing a specific function in one or more procedures in the flowcharts and/or in one or more blocks in the block diagrams.

These computer program instructions may alternatively be stored in a computer-readable memory that may instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

Alternatively, these computer program instructions may be loaded onto a computer or another programmable data processing device, so that a series of operations and steps are performed on the computer or the another programmable device, to generate computer-implemented processing. Therefore, the instructions executed on the computer or the other programmable device provide steps for implementing a specific function in one or more procedures in the flowcharts and/or in one or more blocks in the block diagrams.

Although embodiments of this application are described, a person skilled in the art may make additional changes and modifications to these embodiments once the basic inventive concept is learned. Therefore, the appended claims shall be construed to cover the embodiments and all changes and modifications falling within the scope of this application.

Clearly, a person skilled in the art may make various changes and variations to this application without departing from the spirit and scope of this application. Therefore, this application is also intended to cover the changes and variations provided that the changes and variations of this application fall within the scope of the claims of this application or equivalent technologies thereof.

**Claims**

1. A roaming test method, applied to terminal equipment and comprising:

performing augmented reality AR positioning on the terminal equipment to obtain AR coordinates of a track point of the terminal equipment; and determining detection data corresponding to the track point, wherein the AR coordinates are coordinates in an AR coordinate system of the terminal equipment, and the track point represents a position of the terminal equipment in a roaming test in a detection region; and

updating a movement track of the terminal equipment based on the AR coordinates of the track point, and displaying the movement track and the corresponding detection data.

2. The method according to claim 1, wherein before the updating the movement track displayed on the terminal equipment, the method further comprises:

determining image coordinates of a first positioning point in ambient image data and first AR coordinates of the first positioning point in an initial AR coordinate system based on the ambient image data of the detection region, wherein the first positioning point comprises at least two first positioning sub-points; and

determining a first adjustment scale for the image coordinate system and the initial AR coordinate system based on the image coordinates of the first positioning point and the first AR coordinates of the first positioning point.

3. The method according to claim 2, wherein the performing the augmented reality AR positioning on the terminal equipment to obtain the AR coordinates of the track point of the mobile terminal comprises:
when the AR coordinate system corresponding to the terminal equipment is not shifted, performing the AR positioning on the terminal equipment based on the initial AR coordinate system to obtain the first AR coordinates of the track point of the terminal equipment.

4. The method according to claim 3, wherein the updating the movement track displayed on the terminal equipment based on the AR coordinates of the track point comprises:

when the AR coordinate system corresponding to the terminal equipment is not shifted, converting the first AR coordinates of the track point into image coordinates of the track point based on the first adjustment scale; and generating a movement track of the terminal equipment in the floor plan based on the image coordinates of the track point.

5. The method according to claim 4, wherein the first adjustment scale comprises a first transverse adjustment scale and a first longitudinal adjustment scale; and
the first transverse adjustment scale is determined based on an image abscissa difference and an AR abscissa difference between different first positioning sub-points; and the first longitudinal adjustment scale is determined based on an image ordinate difference and an AR ordinate difference between the different first positioning sub-points.

6. The method according to claim 5, wherein the converting the first AR coordinates of the track point into the image coordinates of the track point based on the first adjustment scale comprises:

determining a first AR abscissa change based on a difference between a first AR abscissa of the track point and an AR abscissa of one of the first positioning sub-points; determining an image abscissa change based on the first AR abscissa change and the first transverse adjustment scale; and adding the image abscissa change to the image abscissa of the first positioning sub-point, to obtain the image abscissa of the track point; and

determining a first AR ordinate change based on a difference between a first AR ordinate of the track point and a first AR ordinate of the one of the first positioning sub-points; determining an image ordinate change based on the first AR ordinate change and the first longitudinal adjustment scale; and adding the image ordinate change to the image ordinate of the first positioning sub-point, to obtain the image ordinate of the track point.

7. The method according to claim 2, wherein the method further comprises:

when the AR coordinate system corresponding to the terminal equipment is shifted, determining image coordinates of a second positioning point and second AR coordinates of the second positioning point in the shifted AR coordinate system, wherein the second positioning point comprises at least two second positioning sub-points; and

determining a second adjustment scale for the image coordinate system and the shifted AR coordinate system based on the image coordinates of the second positioning point and the second AR coordinates of the second positioning point.

8. The method according to claim 7, wherein the performing the augmented reality AR positioning on the terminal equipment to obtain AR coordinates of the track point of the mobile terminal comprises:
when the AR coordinate system corresponding to the terminal equipment is shifted, performing the AR positioning on the mobile terminal based on the shifted AR coordinate system to obtain the second AR coordinates of the track point of the mobile terminal.

9. The method according to claim 8, wherein the updating the movement track displayed on the terminal equipment based on the AR coordinates of the track point comprises:

when the AR coordinate system corresponding to the terminal equipment is shifted, converting the second AR coordinates of the track point into the image coordinates of the track point based on the second adjustment scale; and
generating a movement track of the terminal equipment in the ambient image data based on the image coordinates of the track point.

10. The method according to claim 7, wherein when the AR coordinate system corresponding to the terminal equipment is shifted, the method further comprises:

converting the second AR coordinates of the track point into the first AR coordinates in the initial AR coordinate system based on the first adjustment scale and the second adjustment scale; and
after the roaming test is completed, generating a roaming track corresponding to the roaming test based on first AR coordinates of all track points.

11. The method according to claim 1, wherein the method further comprises:
annotating a target track point in the movement track.

12. The method according to claim 1, wherein the updating the movement track displayed on the terminal equipment and displaying the detection data further comprises:
displaying the movement track on a collected reality view of the detection region.

13. The method according to claim 12, wherein the displaying the movement track on the collected reality view of the detection region comprises:
when the movement track comprises a target track point, rendering annotation information corresponding to the target track point in the reality view.

14. The method according to claim 11 or 13, wherein the target track point is determined in the following methods:

in response to a user annotation instruction, determining a track point corresponding to the user annotation instruction as the target track point, wherein an annotation type of the target track point is a user annotation; and/or
determining, as the target track point, the track point representing AP switching, wherein an annotation type of the target track point is roaming.

15. The method according to claim 13, wherein the method further comprises:
when the reality view comprises a target region, rendering AP information corresponding to the target region in the reality view, wherein the target region comprises a position of an AP which the terminal equipment currently accesses.

16. The method according to claim 1, wherein the method further comprises:
generating a roaming report for the detection region, wherein the roaming report comprises a part or all of a roaming track, a number of roaming times, a signal strength change curve, and a latency change curve corresponding to the roaming test.

17. A roaming test apparatus, applied to augmented reality terminal equipment and comprising:

an augmented reality AR positioning module, configured to perform AR positioning on the terminal equipment to obtain AR coordinates of a track point of the terminal equipment, wherein the AR coordinates are coordinates in an AR coordinate system of the terminal equipment, and the track point represents a position of the terminal equipment in a roaming test in a detection region;
a test module, configured to determine detection data corresponding to the track point;
a movement track generating module, configured to update a movement track of the terminal equipment based on the AR coordinates of the track point; and
a display module, configured to display the movement track and corresponding detection data.

18. Augmented reality terminal equipment, comprising at least one processor and at least one memory, wherein the memory stores a computer program, and when the program is executed by the processor, the processor is enabled to perform the method according to any one of claims 1 to 16.

19. A computer-readable storage medium, storing a computer program that may be executed by a computer, wherein when the program runs on the computer, the computer is enabled to perform the method according to any one of claims 1 to 16.

Perform AR positioning at a track point of terminal equipment to obtain AR coordinates of the track point, and determine detection data corresponding to the track point ⟋ S101

Generate a movement track of the terminal equipment based on the AR coordinates of the track point ⟋ S102

Display the movement track and the detection data ⟋ S103

FIG. 1

Signal strength change curve | Current network parameter

Roaming-related information

Current

Start

FIG. 2

Determine image coordinates and first AR coordinates of a first positioning point in a detection region in response to ambient image data of the detection region ⟋ S301

Determine a first adjustment scale for an image coordinate system and an initial AR coordinate system based on the image coordinates and the first AR coordinates of the first positioning point ⟋ S302

Perform AR positioning at a track point of terminal equipment to obtain the first AR coordinates of the track point, and determine detection data corresponding to the track point ⟋ S303

Convert the first AR coordinates of the track point into the image coordinates of the track point based on the first adjustment scale ⟋ S304

Generate a movement track of the terminal equipment in a floor plan based on the image coordinates of the track point ⟋ S305

Display the movement track and the detection data ⟋ S306

FIG. 3

FIG. 4

When an AR coordinate system corresponding to terminal equipment is shifted, determine image coordinates and second AR coordinates of a second positioning point — S501

Determine a second adjustment scale for an image coordinate system and the shifted AR coordinate system based on the image coordinates and the second AR coordinates of the second positioning point — S502

Perform AR positioning at a track point of the terminal equipment to obtain second AR coordinates of the track point, and determine detection data corresponding to the track point — S503

Convert the second AR coordinates of the track point after the shift into the image coordinates of the track point after the shift based on the second adjustment scale — S504

Generate a movement track of the terminal equipment after the shift in a floor plan based on the image coordinates of the track point after the shift — S505

Display the movement track and the detection data — S506

FIG. 5

09:29

| Signal strength change curve | Current network parameter |

Roaming-related information

Reality view

Movement track

FIG. 6

Current

Type

Start

FIG. 7

Reality view

User annotation

Network parameter

Weak signal at a stairwell door

FIG. 8

## Reality view

Roaming
AP1→AP2

AP1 address

Signal strength change

Roaming time

Packet loss in roaming

AP2 address

FIG. 9

Reality view

AP2

FIG. 10

Roaming test apparatus 1100

AR positioning module 1101

Test module 1102

Movement track generating module 1103

Display module 1104

Coordinate conversion module 1105

Report generating module 1106

FIG. 11

Terminal equipment 1200

1201

Processor

Bus 1203

Memory 1202

FIG. 12

## INTERNATIONAL SEARCH REPORT

| International application No. |
|---|
| **PCT/CN2024/090948** |

**A. CLASSIFICATION OF SUBJECT MATTER**

H04W24/08(2009.01)i

According to International Patent Classification (IPC) or to both national classification and IPC

**B. FIELDS SEARCHED**

Minimum documentation searched (classification system followed by classification symbols)

IPC:H04,G06

Documentation searched other than minimum documentation to the extent that such documents are included in the fields searched

Electronic data base consulted during the international search (name of data base and, where practicable, search terms used)

CNTXT, CNKI, VEN, USTXT, EPTXT, WOTXT, JPTXT, 3GPP: AR, 增强现实, augmented reality, 坐标, axis, coordinate, 横坐标, 纵坐标, point, horizontal, vertical, X, Y, 转换, transform, 调整, mapping, 对应, 映射

**C. DOCUMENTS CONSIDERED TO BE RELEVANT**

| Category* | Citation of document, with indication, where appropriate, of the relevant passages | Relevant to claim No. |
|---|---|---|
| X | CN 114549582 A (ZHEJIANG DAHUA TECHNOLOGY CO., LTD.) 27 May 2022 (2022-05-27) <br> description, paragraphs [0022]-[0035] | 1, 11-19 |
| A | CN 115496832 A (BEIJING TOPSEC NETWORK SECURITY TECHNOLOGY CO., LTD. et al.) 20 December 2022 (2022-12-20) <br> entire document | 1-19 |
| A | CN 115082580 A (ZHEJIANG DAHUA TECHNOLOGY CO., LTD.) 20 September 2022 (2022-09-20) <br> entire document | 1-19 |
| A | CN 112418137 A (HANGZHOU YUNBI INTELLIGENT TECHNOLOGY CO., LTD.) 26 February 2021 (2021-02-26) <br> entire document | 1-19 |
| A | WO 2023022305 A1 (INDUSTRY-ACADEMIC COOPERATION FOUNDATION, YONSEI UNIVERSITY) 23 February 2023 (2023-02-23) <br> entire document | 1-19 |

☑ Further documents are listed in the continuation of Box C.    ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **27 June 2024** | **10 July 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/090948** |

### C. DOCUMENTS CONSIDERED TO BE RELEVANT

| Category* | Citation of document, with indication, where appropriate, of the relevant passages | Relevant to claim No. |
|---|---|---|
| A | US 2022078335 A1 (BEIJING XIAOMI MOBILE SOFTWARE CO., LTD.) 10 March 2022 (2022-03-10)<br>entire document | 1-19 |

Form PCT/ISA/210 (second sheet) (July 2022)

**INTERNATIONAL SEARCH REPORT**
**Information on patent family members**

International application No.

**PCT/CN2024/090948**

| Patent document cited in search report | | | Publication date (day/month/year) | Patent family member(s) | | | Publication date (day/month/year) |
|---|---|---|---|---|---|---|---|
| CN | 114549582 | A | 27 May 2022 | None | | | |
| CN | 115496832 | A | 20 December 2022 | None | | | |
| CN | 115082580 | A | 20 September 2022 | None | | | |
| CN | 112418137 | A | 26 February 2021 | None | | | |
| WO | 2023022305 | A1 | 23 February 2023 | KR | 20230025992 | A | 24 February 2023 |
| | | | | KR | 102583899 | B1 | 26 September 2023 |
| US | 2022078335 | A1 | 10 March 2022 | EP | 3968626 | A1 | 16 March 2022 |
| | | | | KR | 20220033402 | A | 16 March 2022 |
| | | | | KR | 102575196 | B1 | 06 September 2023 |
| | | | | US | 11457139 | B2 | 27 September 2022 |
| | | | | JP | 2022045887 | A | 22 March 2022 |
| | | | | JP | 7110443 | B2 | 01 August 2022 |

Form PCT/ISA/210 (patent family annex) (July 2022)

## REFERENCES CITED IN THE DESCRIPTION

**Patent documents cited in the description**

- CN 202310797641